**Europäisches Patentamt**

**European Patent Office**

**Office européen des brevets**

(19)

(11) Veröffentlichungsnummer: **0 164 530**
**B1**

(12) **EUROPÄISCHE PATENTSCHRIFT**

(45) Veröffentlichungstag der Patentschrift:
20.07.88

(51) Int. Cl.⁴: **G 01 N 27/56**

(21) Anmeldenummer: **85104699.5**

(22) Anmeldetag: **18.04.85**

(54) **Sauerstoffmessfühler.**

(30) Priorität: **16.05.84 DE 3418142**

(43) Veröffentlichungstag der Anmeldung:
**18.12.85 Patentblatt 85/51**

(45) Bekanntmachung des Hinweises auf die Patenterteilung:
**20.07.88 Patentblatt 88/29**

(84) Benannte Vertragsstaaten:
**DE FR GB IT**

(56) Entgegenhaltungen:
**EP-A-0 056 837**
**DE-A-3 035 608**
**DE-A-3 237 628**
**GB-A-2 017 926**
**US-A-4 415 878**

(73) Patentinhaber: **ROBERT BOSCH GMBH, Postfach 50, D-7000 Stuttgart 1 (DE)**

(72) Erfinder: **Ziegler, Bodo, Dipl.- Ing., Paul- Lincke- Strasse 24, D-7000 Stuttgart 1 (DE)**

EP 0 164 530 B1

LIBER, STOCKHOLM 1988

## Beschreibung

### Stand der Technik

Die Erfindung geht aus von einem Sauerstoffmeßfühler nach der Gattung des Hauptanspruchs. Es ist schon ein Sauerstoffmeßfühler bekannt (DE-U-8 101 584, entspricht EP-A-0 056 837), bei dem im Innenraum seines rohrförmigen Sensorelementes ein elektrischer Heizkörper mit einem stabförmigen, keramischen Heizelement-Träger eingebaut ist; bei diesem Sauerstoffmeßfühler ist der innere, durch den Heizkörper und dessen elektrischen Verbindungen beeinflußte Aufbau aber relativ kompliziert und demzufolge teuer; der den Heizkörper und dessen elektrische Zuleitungen betreffende Bereich des Sauerstoffmeßfühlers ist darüber hinaus auf Dauer nicht besonders schüttelfest und demzufolge nicht betriebssicher.

Bekannt ist auch bereits ein Sauerstoffmeßfühler (DE-A-3 056 608) mit einem drahtförmigen Heizelement, das wendelförmig um das mit einer Meßelektrode und einer darauf angeordneten Elektroisolierschicht versehene Festelektrolytrohr geschlungen ist. Das Festelektrolytrohr ist mit einem bis in seinen Innenraum durchgehenden offenen Längsschlitz versehen, durch welchen die Anschlußdrähte der Heizwendel geführt sind; die Anschlußdrähte verlaufen im Innenraum zunächst durch eine beispielsweise aus Glas bestehende Dichtung und dann durch Längskanäle in einem Elektroisolierteil in Richtung des Meßfühler-Anschlußbereiches. Die Anordnung hat aus Kosten-, Funktions- und Zuverlässigkeitsgründen die auf Dauer erwarteten Ansprüche nicht erfüllt.

### Vorteile der Erfindung

Der erfindungsgemäße Sauerstoffmeßfühler mit den Merkmalen des Anspruchs 1 hat demgegenüber den Vorteil, daß sein innerer Aufbau einfacher gestaltet, demzufolge auch problemloser montierbar und deshalb insgesamt billiger ist. Als weiterer Vorteil ist anzusehen, daß die erfindungsgemäße Ausführungsform des Sauerstoffmeßfühlers robuster und schüttelfester ist als die unter dem Abschnitt "Stand der Technik" genannten Sauerstoffmeßfühler.

Durch die in den abhängigen Ansprüchen aufgeführt Maßnahmen sind vorteilhafte Weiterbildungen und Verbesserungen des Anspruch 1 angegebenen Sauerstoffmeßfühlers möglich. Besonders vorteilhaft ist es, wenn der Träger des Heizkörpers direkt an das Elektroisolierteil mit angeformt ist, denn die Herstellung derartiger Meßfühler wird durch diese Maßnahme noch weiter verbilligt und die Schüttelfestigkeit dieser Meßfühler auch noch weiter erhöht. Sofern die elektrischen Zuleitungen zum Heizkörper und gegebenenfalls auch zumindest einer Elektrode des Sauerstoffmeßfühlers auf dem Elektroisolierteil als elektrisch isolierte Leiterbahnen ausgebildet sind, lassen sich die letztgenannten Vorteile noch weiter verbessern.

### Zeichnung

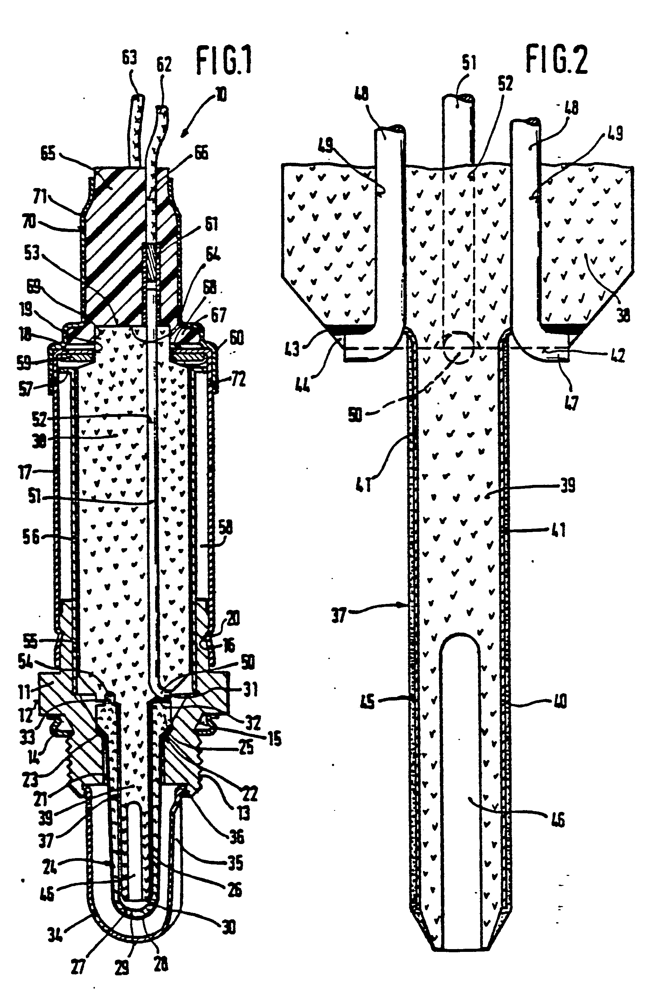

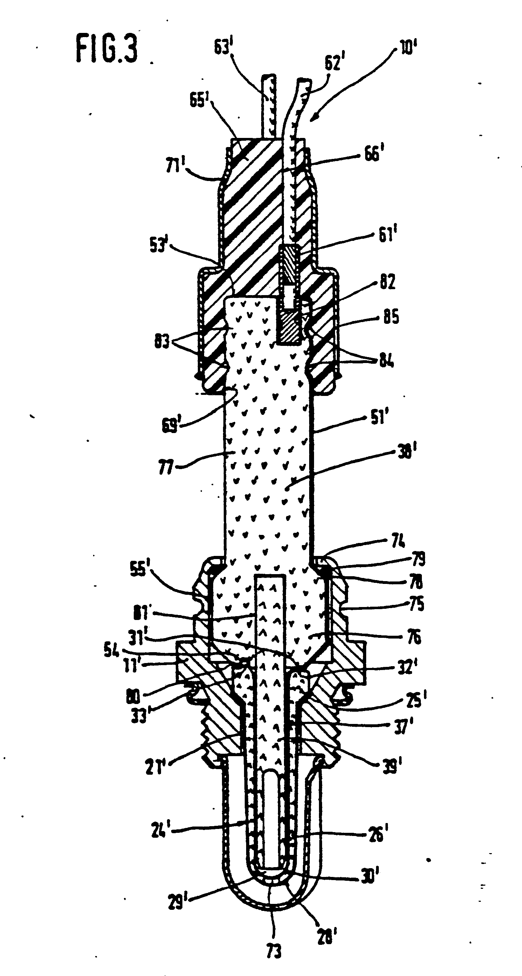

Ausführungsbeispiele der Erfindung sind in der Zeichnung dargestellt und in der nachfolgenden Beschreibung näher erläutert. Es zeigen Figur 1 einen Längsschnitt durch eine erste Ausführungsform eines erfindungsgemäßen Sauerstoffmeßfühlers in vergrößerter Darstellung, Figur 2 einen Langsschnitt durch den meßgasseitigen Endabschnitt des Elektroisolierteils mit dem elektrischen Heizkorper des Sauerstoffmeßfühlers nach Figur 1 in noch weiter vergrößerter Darstellung und Figur 3 einen Längsschnitt durch eine zweite Ausführungsform eines erfindungsgemäßen Sauerstoffmeßfühlers in vergrößerter Darstellung.

### Beschreibung der Ausführungsbeispiele

Der in den Figuren 1 und 2 der Zeichnung dargestellte Sauerstoffmeßfühler 10 hat ein metallisches Gehäuse 11, das an seiner Außenseite ein Schlüsselsechskant 12 und ein Gewinde 13 als Befestigungsmittel für den Einbau in ein nicht dargestelltes Meßgasrohr aufweist; für den abdichtenden Einbau dieses Gehäuses 11 in dem Meßgasrohr dient ein ringförmiges Dichtelement 14, das in einer zwischen Schlüsselsechskant 12 und Gewinde 13 angeordneten Ringnut 15 unverlierbar festgelegt ist. Auf dem meßgasfernen Endabschnitt des Gehäuses 11 ist noch eine Ringnut 16 eingearbeitet, die zur Festlegung einer das Gehäuse 11 Verlängern den Verschlußhülse 17 dient; diese Verschlußhülse 17, welche meßgasfern einen Boden 18 mit einer zentralen Öffnung 19 hat, ist mittels mehrerer Einprägungen 20 in der Ringnut 16 Festgelegt.

Das Gehäuse 11 hat eine Längsbohrung 21 mit einer Schulter 22, die der Meßseite des Sauerstoffmeßfühlers 10 abgewendet ist und ein ringförmiges metallisches Dichtelement 23 trägt. Auf dieser mit dem Dichtelement 23 versehenen Schulter 22 der Gehäuse-Längsbohrung 21 liegt ein Sensorelement 24 mit seinem Kopf 25 auf.

Dieses Sensorelement 24 ist im vorliegenden Beispiel ein an sich bekannter Sauerstoffmeßfühler, wie er aus der DE-U-8 101 584 bekannt ist und der bevorzugterweise für das Messen des Sauerstoffpartialdruckes in Abgasen von Brennkraftmaschinen und Ofenanlagen Verwendung findet. Dieses Sensorelement 24 hat ein aus Zirkondioxid bestehendes Festelektrolytrohr 26, dessen meßgasseitiger Endabschnitt mittels eines Bodens 27 verschlossen ist; auf seiner dem Meßgas ausgesetzten Außenseite trägt dieses Festelektrolytrohr 26 eine schichtförmige, gasdurchlässige Meßelektrode 28 und auf seiner dem Innenraum 29 zugewendeten Seite ist es mit einer schichtförmigen Gegen- oder Bezugselektrode 30 versehen, welche einem Referenzgas (z. B. Luft) ausgesetzt und gasdurchlässig ist. Zur Erhöhung der Lebensdauer der zumeist aus einer dünnen Platinschicht bestehenden Meßelektrode 28 ist diese bekannterweise mit einer gasdurchlässigen (nicht dargestellten) Schutzschicht überzogen, die beispielsweise aus Magnesiumspinell bestehen kann.

Anstelle dessen, daß das Festelektrolytrohr 26 vollständig aus einem Sauerstoffionen leitendem Material wie Zirkondioxid besteht, kann es auch so aufgebaut sein, daß nur der Meßbereich aus sauerstoffionenleitendem Material besteht und der verbleibende Abschnitt von einem anderen Material, bevorzugt einem anderen keramischem Material (z. B. Aluminiumoxid) gebildet wird. Während die Meßelektrode 28 über das ringförmige Dichtelement 23 mit dem elektrisch an Masse liegenden Gehäuse 11 in Berührung steht, führt die Bezugselektrode 30 bevorzugterweise von der Innenseite des Bodens 27 bis auf die meßgasferne Stirnfläche 31 des Festelektrolytrohres 26 und bildet hier auf einem Teilbereich der Stirnfläche 31 einen Kontaktbereich 32. Zwischen dem Kontaktbereich 32 der Bezugselektrode 30 und der Stirnfläche 31 des Fastelektrolytrohres 26 befindet sich vorteilhafterweise eine Elektroisolierschicht, welche beispielsweise aus Aluminiumoxid bestehen kann, aber in der Zeichnung nicht besonders dargestellt ist. An die meßgasferne Stirnfläche 31 des Festelektrolytrohres 26 ist eine konvexe Fixiernase 33 mit angeformt, deren Funktion später beschrieben wird.

Der meßgasseits aus der Längsbohrung 21 des Gehäuses 11 herausragende Abschnitt des Sensorelementes 24 ist mit Abstand von einem Schutzrohr 34 umgeben, welches für den Ein- bzw. Austritt von Meßgasen Öffnungen 35 besitzt und am meßgasseitigen Ende des Gehäuses 11 durch eine Bördelung 36 oder ein anderes hierfür bekanntes Mittel festgelegt ist; dieses Schutzrohr 34 dient dazu, daß im Meßgas auftretende hohe Temperaturwechsel und im Meßgas enthaltene Partikel nicht direkt auf das Sensorelement 24 einwirken und zu Schäden daran führen.

Der Innenraum 29 des Festelektrolytrohres 26 ist im wesentlichen durch einen stabförmigen, elektrischen Heizkörper 37 ausgefüllt, welcher meßgasseits bis nahe an den Boden 27 des Festelektrolytrohres 26 reicht und meßgasfern einteilig an ein Elektroisolierteil 38 angeformt ist. Dieses Elektroisolierteil 38 mit seinem in den Innenraum 29 des Festelektrolytrohres 26 hineinragenden Träger 39 für das eigentliche Heizelement 40 besteht vorzugsweise aus Keramik wie z. B. Aluminiumoxid. Das Heizelement 40 wird in bevorzugter Weise als Leiterbahn ausgebildet, die sich im wesentlichen in demjenigen Bereich des Festelektrolytrohres 26 befindet, welcher den Meßbereich des Sensorelementes 24 bildet. Dieses Heizelement 40, das beispielsweise aus Platin bestehen kann, ist über entsprechende leiterbahnförmige Zuleitungen 41 bis auf eine Schulter 42 des Elektroisolierteiles 38 geführt, die zwischen dem Heizelement-Träger 39 und dem eigentlichen Elektroisolierteil 38 gebildet ist. Die im Bereich dieser Schulter 42 befindlichen Abschnitte der Heizelement-Zuleitungen 41 sind in bevorzugter Ausführungsform etwas verdickt und bilden somit Kontaktbereiche 43; bei der dargestellten Ausführungsform des Elektroisolierteiles 38 sind diese Kontaktbereiche 43 in Fixiermulden 44 der Schulter 42 angeordnet, die sich radial in Richtung Heizelement-Träger 39 erstrecken. Das leiterbahnartige Heizelement 40 und seine elektrischen Zuleitungen 41 sind - ausschließlich der Kontaktbereiche 43 - mittels einer Elektroisolierschicht 45 abgedeckt, die beispielsweise aus Aluminiumoxid oder Magnesiumspinell bestehen kann. Der aus Träger 39, Heizelement 40 und Elektroisolierschicht 45 bestehende Heizkörper 37 füllt weitgehend den Innenraum 29 des Festelektrolytrohres 26 aus. Um ein möglichst schnelles Aufheizen des Heizkörpers 37 in demjenigen Bereich des Sensorelementes 24 zu bewirken, in welchem der eigentliche Meßvorgang stattfindet, ist der meßgasseitige Endabschnitt des Heizelement-Trägers 39 mit einer sackförmigen Axialbohrung 46 versehen, infolge welcher der meßgasseitige Endabschnitt des Heizelement-Trägers 39 ein verringertes aufzuheizendes Volumen besitzt. Diese Axialbohrung 46 kann bei der Herstellung des Elektroisolierteils 38 einschließlich seines Heizelement-Trägers 39 auch zur Fixierung dienen, was insbesondere beim Aufdrucken des Heizelementes 40 und dessen Zuleitungen 41 von besonderem Vorteil ist.

Auf den Kontaktbereichen 43 des Heizelementes 40 liegen die rechtwinklig abgebogenen Kontaktenden 47 von drahtförmigen Verbindungsmitteln 48 auf, welche durch Längsbohrungen 49 durch das Elektroisolierteil 38 hindurchführen. Meßgasseits liegen die Kontaktenden 47 der Verbindungsmittel 48 auf der Stirnfläche 31 des Festelektrolytrohres 26 auf, jedoch in Bereichen, welche gegenüber dem Kontaktbereich 32 der hier auch endenden Bezugselektrode 30 elektrisch isoliert sind.

Auf dem Kontaktbereich 32 für die Bezugselektrode 30 liegt ebenfalls ein abgewinkeltes Kontaktende 50 eines drahtförmigen Verbindungsmittels 51 auf, welches in einer Längsbohrung 52 des Elektroisolierteils 38 verläuft und wie auch bei den Verbindungsmitteln 48 für das Heizelement 40 - mit seinem meßgasfernen Endabschnitt aus der meßgasfernen Stirnfläche 53 des Elektroisolierteils 38 herausragt.

In der Schulter 42 des Elektroisolierteiles 38 ist ein Fixierloch 54 mit eingeformt, in welches die aus der Stirnfläche 31 des Festelektrolytrohres 26 herausragende Fixiernase 33 derart hineinfaßt, so daß die Kontaktenden 47 und 50 der Verbindungsmittel 48 und 51 in der richtigen Lage gehalten werden. Anstelle einer solchen Fixiernase 33 mit einem entsprechenden Fixierloch 54 können aber auch in der Stirnfläche 31 des Festelektrolytrohres 24 (nicht dargestellte) Vertiefungen vorgesehen werden, in welche die Kontaktenden 47 bzw. 50 fixierend hineinragen; bei all diesen oder ähnlichen Lösungen müssen jedoch die Kontaktenden 47 und 50 zwischen der Schulter 42 des Elektroisolierteiles 38 und der Stirnfläche 31 des Festelektrolytrohres 26 sicher eingeklemmt sein.

Das Elektroisolierteil 38 ist im wesentlichen zylinderförmig, besteht vorzugsweise aus keramischem Material (z. B. Aluminiumoxid) und ragt mit seinem sich dem Heizkörper 37 meßgasfern anschließenden Abschnitt in eine Aufbohrung 55 des meßgasfernen Endabschnitts der Gehäuselängsbohrung 21 hinein. In diese Aufbohrung 55 ragt auch der meßgasseitige Endabschnitt einer metallischen Führungshülse 56 hinein, welche das Elektroisolierteil 38 koaxial umgibt; diese Führungshülse 56 kann in der Aufbohrung 55 des Gehäuses 11 durch Einpressen, Verstemmen, Löten oder ähnliches festgelegt sein und hat an ihrem meßgasfernen Ende einen nach außen weisenden Flansch 57, der seitlich bis nahe an die Verschlußhülse 17 reicht; der zwischen dieser Führungshülse 56 und der Verschlußhülse 17 gebildete Ringraum 58 wirkt als Barriere gegenüber Feuchtigkeit, die im Bereich zwischen dem meßgasseitigen Endabschnitt der Verschlußhülse 17 und dem Gehäuse 11 mit der als Referenzgas dienenden Luft in den Sauerstoffmeßfühler 10 eintreten kann. Zwischen dem Flansch 57 der Führungshülse 56 und dem Boden 18 der Verschlußhülse 17 ist ein ringförmiges. Federelement 59 (Tellerfeder) angeordnet, daß sich einerseits an dem Boden 18 der Verschlußhülse 17 abstützt und andererseits unter mechanischer Vorspannung auf einer von der Meßseite des Sauerstoffmeßfühlers 10 wegweisenden, koaxialen Schulter 60 des Elektroisolierteils 38 aufliegt. Infolge der mechanischen Vorspannung des Federelementes 59 wird das Elektroisolierteil 38 mit den an seiner meßgasseitigen Schulter 42 anliegenden Kontaktenden 47 und 50 in Richtung auf die meßgasferne Stirnfläche 31 des Festelektrolytrohres 26 gedruckt und bewirkt derart die in diesem Bereich erforderlichen Kontaktdrücke.

Auf jeden der meßgasfern aus dem Elektroisolierteil 38 herausragenden Endabschnitte der Verbindungsmittel 48 und 51 ist eine metallische Verbindungshülse 61 aufgeschoben und mittels eines bekannten Verfahrens wie z. B. Verquetschen, Verlöten, Verschweißen festgelegt; die Verbindungshülsen 61 stehen mit ihrem meßgasseitigem Ende auf der Stirnfläche 53 des Elektroisolierteils 38 auf. Die meßgasfernen Endabschnitte der Verbindungshülsen 61 umfassen die abisolierten Endabschnitte von Anschlußdrähten 62 und 63 fur die Bezugselektrode 30 bzw. für den Heizkörper 37 des Sauerstoffmeßfühlers 10; diese abisolierten, meßgasseitigen Endabschnitte der Anschlußdrähte 62 und 63 sind in den Verbindungshülsen 61 durch Verquetschen, Verschweißen und/oder Verlöten befestigt.

Außer den Verbindungshülsen 61 steht auf der meßgasfernen Stirnfläche 53 des Elektroisolierteiles 38 die meßgasseitige Stirnfläche 64 eines elastischen Isolierstopfens 65 auf, von dessen längsverlaufenden Durchgangsbohrungen 66 die Anschußdrähte 62, 63 einschließlich der Verbindungshülsen 61 abdichtend umfaßt werden. Meßgasseits ist dieser Isolierstopfen 65 mit einem Flanschteil 67 ausgestattet, dessen meßgasseitige Endfläche 68 auf der Aussenseite des Verschlußhülsen-Bodens 18 abdichtend aufsteht; die meßgasseitige Stirnfläche 64 des Isolierstopfens 65 ist dabei in bevorzugter Weise in einer koaxialen Aussparung 69 des Flanschteils 67 angeordnet, welche den meßgasfernen Endabschnitt des Elektroisolierteils 38 aufnimmt. Auf der Mantelfläche 70 dieses Isolierstopfens ist eine rohrförmige, vorzugsweise metallische Kopfhülse 71 angeordnet, die mit ihrem aufgeweiteten, meßgasseitigen Endabschnitt eng über den meßgasfernen Endabschnitt der Verschlußhülse 17 greift; die Kopfhülse 71 ist an der Verschlußhülse 17 mittels einiger Schweißpunkte 72 oder anderer bekannter Befestigungsmittel festgelegt und halt den Isolierstopfen 65 in Längsrichtung des Sauerstoffmeßfühlers 10 unter mechanischer Vorspannung.

Anstelle, daß für den elektrischen Anschluß des Heizelementes 40 zwei drahtförmige Verbindungsmittel 48 durch den Sauerstoffmeßfühler 10 hindurchführen, kann alternativ eines dieser Verbindungsmittel dadurch eingespart werden, daß die elektrische Rückleitung des Heizelementes 40 über einen nicht dargestellten Leiterbahnabschnitt gebildet wird, welcher von der Stirnfläche 31 des Festelektrolytrohres 26 bis zum Dichtelement 23 geführt ist und demzufolge den der elektrischen Rückleitung dienenden, auf der Schulter 42 des Elektroisolierteils 38 befindlichen Kontaktbereich 43 mit dem elektrisch an Masse liegenden Gehäuse 11 verbindet.

In der Figur 3 ist eine Ausführungsform eines Sauerstoffmeßfühlers 10' dargestellt, bei dem sich das Sensorelement 24' von dem Sensorelement 24 gemäß dem Beispiel in Figur 1 dadurch unterscheidet, daß der Innenraum 29' des Festelektrolytrohres 26' nicht gegenüber dem Meßgas abgedichtet ist, sondern daß dem Meßgas über einen Durchbruch 73 im Festelektrolytrohr 26' der Zutritt ermöglicht wird. Bei einer solchen Art von Sauerstoffmeßfühler 10' besteht die Meßelektrode 28' in bekannter Weise aus einem Material (z. B. Platin), das katalytisch aktiver ist als das Material (z. B. Gold) der auf der Innenseite des restelektrolytrohres 26' befindlichen Bezugselektrode 30'. Der sonstige Aufbau des Sensorelementes 24' entspricht dem Sensorelement 24 gemäß Figur 1. Dieses Sensorelement 24' ist in ein Metallgehäuse 11' eingebaut, welches sich von dem Gehäuse 11 gemäß Figur 1 dadurch unterscheidet, daß sein meßgasferner Endabschnitt mit einem Bördelrand 74 und mit einem ringförmigen Warmschrumpfbereich 75 versehen ist. In der meßgasfernen Aufbohrung 55' der Gehäuse-Längsbohrung 21' ist der als Kopf 76 ausgebildete meßgasseitige Abschnitt des Elektroisolierteiles 38' angeordnet, welcher mit dem Schaft 77 des Elektroisolierteils 38' eine koaxiale, ringförmige Schulter 78 bildet. Auf dieser Schulter 78 liegt ein Bördelring 79 auf, auf welchen der Bördelrand 74 des Gehäuses 11' aufdrückt. In der meßseitigen Stirnseite 80 dieses Elektroisolierteil-Kopfes 76 befindet sich ein axial verlaufendes Sackloch 81, in welchem der meßgasferne Endabschnitt eines Keizkörper-Trägers 39' festgelegt ist (z. B. durch Einsintern). Eine solche Art der Kombination von Elektroisolierteil 38' und Heizkörper-Träger 39' kann aus sintertechnischen Gründen zweckmäßig sein, kann aber auch zur Beeinflussung der Wärmeleitfähigkeit Anwendung finden. Die Anordnung und Gestaltung des in dieser Figur 3 nicht dargestellten Heizelementes einschließlich seiner Zuleitungen und der Elektroisolierschicht entspricht dem Ausführungsbeispiel gemäß der Figuren 1 und 2.

Auf der meßgasseitigen Stirnseite 80 des Elektroisolierteiles 38' sind als elektrisches Verbindungsmittel 51' für die Bezugselektrode 30' des Sensorelementes 24' und auch für die in dieser Figur 3 nicht dargestellten Heizelement-Zuleitungen Leiterbahnen angeordnet, welche auf der Außenseite des Elektroisolierteiles 38' bis hinauf auf die meßgasferne Stirnfläche 53' und bevorzugterweise noch in je ein in dieser Stirnfläche 53' befindliches Sackloch 82 hineinführen. In die drei Sacklöcher 82 ist je eine Verbindungshülse 61' eingelötet, deren vorzugsweise massiver Abschnitt in das jeweilige Sackloch 82 hineinragt und deren meßgasferner Abschnitt das abisolierte Ende je eines Anschlußdrahtes 62' bzw. 63' umfaßt; die leiterbahnartigen Verbindungsmittel 51' für die Bezugselektrode 30' des Sensorelementes 24' und auch die in dieser Figur 3 nicht dargestellten Leiterbahnen des Heizkörpers 37' sind auf den Elektroisolierteil 38' derart mittels einer nicht dargestellten Elektroisolierschicht abgedeckt, so daß nur der Kontaktbereich 32' auf der Stirnseite 80 des Elektroisolierteiles 38' und die in den Sacklöchern 82 befindlichen Bereiche davon unbedeckt bleiben. Infolge der Anordnung des Bördelrandes 74 und des an sich bekannten Warmschrumpfverfahrens, welches im Warmschrumpfbereich 75 des Gehäuses 11' zur Auswirkung kommt, wird die Stirnseite 80 des Elektroisolierteiles 38' fest auf die meßgasferne Stirnfläche 31' des Festelektrolytrohres 26' gedrückt und damit auch die elektrische Verbindung zwischen dem Kontaktbereich 32' der Bezugselektrode 30' des Sensorelementes 24' mit dem leiterbahnartigen Verbindungsmittel 51' hergestellt.

Auf der Mantelfläche des meßgasfernen Endabschnitts vom Elektroisolierteil 38' sind Ringnuten 83 eingeformt, in welche entsprechende Ringwülste 84 abdichtend eingreifen, welche koaxial in einer meßgasseitigen Aussparung 69' eines Isolierstopfens 65' angeordnet sind. Durch diesen gummielastischen Isolierstopfen 65' führen in Längsrichtung Durchgangsbohrungen 66', welche die Verbindungshülsen 61' einschließlich der Anschlußdrähte 62', 63' abdichtend umfassen. Die Mantelfläche dieses Isolierstopfens 65' ist in bekannter Weise von einer metallischen Kopfhülse 71' fest umfaßt; der meßseitige, rohrförmige Endabschnitt dieser Kopfhülse 71' ist in bevorzugter Weise mit längsverlaufenden Spreizschlitzen 85 versehen, welche zum meßgasseitigen Ende der Kopfhülse 71' hin offen sind.

Es sei erwähnt, daß auch bei einem solchen Sauerstoffmeßfühler 10' anstelle einer als elektrische Rückleitung des Keizkörpers 37' dienenden Leiterbahn ein elektrisch isoliertes Leiterbahnteil (nicht dargestellt) Verwendung finden kann, welche über den Kopf 25' des Festelektrolytrohres 26' mit dem Gehäuse 11' des Sauerstoffmeßfühlers 10' verbunden ist. Infolgedessen, daß der Träger 39' des Heizkörpers 37' zunächst als separates Teil hergestellt und dann in das Sackloch 81 des Elektroisolierteiles 38' eingebaut wird, ist es auch möglich, daß anstelle eines stabförmigen Trägers 39' mit rundem Querschnitt auch Träger Verwendung finden können, welche einen anderen Querschnitt haben (z. B. rechteckig).

Wie auch bei dem Beispiel des Sauerstoffmeßfühlers 10 gemäß der Figuren 1 und 2 ist das Elektroisolierteil 38' mit einem Fixierloch 34' in der meßgasseitigen Stirnseite 80 versehen, in welches zur lagerichtigen Fixierung des Sensorelementes 24' eine Fixiernase 33' hineingreift, die an die Stirnfläche 31' des Festelektrolytrohres 26' mit angeformt ist.

## Patentansprüche

1. Sauerstoffmeßfühler (10, 10'), insbesondere zur Bestimmung des Sauerstoffgehaltes in Abgasen von Brennkraftmaschinen und Ofenanlagen, mit einem Metallgehäuse (11, 11'), das Befestigungsmittel (12, 13, 14) für den Einbau in eine Meßgasleitung besitzt und eine abgestufte Längsbohrung (21, 21') aufweist, die mit ihrem meßgasseitigen Endabschnitt mindestens einen Längsabschnitt eines rohrförmigen Keramikteils (26, 26') fest und abdichtend umfaßt, welches mindestens teilweise aus Sauerstoffionen leitendem Material besteht, meßgasseits mit einem Boden (27) verschlossen sein kann, auf seiner Außenseite eine poröse, schichtförmige, bevorzugterweise mit einer porösen Schutzschicht abgedeckte Elektrode (28, 28') trägt, auf seiner Innenseite eine schichtförmige, vorzugsweise poröse Gegenelektrode (30, 30') aufweist, in seinem Innenraum (29, 29') einen elektrischen Heizkörper (37, 37') mit einem stabförmigen keramischen Träger (39, 39') für das Heizelement (40) enthält und auf seinem meßgasfernen Endabschnitt für mindestens eine der beiden Elektroden (28, 28'; 30, 30') einen schichtförmigen Kontaktbereich (32, 32') trägt, der in Berührung mit einem elektrischen Verbindungsmittel (51, 51') steht, welches mittels eines Elektroisolierteils (38, 38') zum meßgasfernen Anschlußbereich des Sauerstoffmeßfühlers (10, 10') geführt ist, dadurch gekennzeichnet, daß das Elektroisolierteil (38, 38') an seinem meßgasseitigen Endabschnitt mit dem elektrischen Heizkörper (37, 37') starr verbunden ist, außerdem mindestens ein elektrisches Verbindungsmittel (48) für den Heizkörper (37, 37') führt und ferner ein Fixierelement (54, 54') aufweist, mittels welchem vorhandene elektrische Kontaktbereiche (43) auf dem Elektroisolierteil (38, 38') mit zugeordneten Kontaktbereichen (32, 32') auf dem Festelektrolytrohr (26, 26') in bestimmter Lage gehalten werden.

2. Sauerstoffmeßfühler nach Anspruch 1, dadurch gekennzeichnet, daß der Träger (39) des Heizelementes (40) an dem Elektroisolierteil (38) mit angeformt ist.

3. Sauerstoffmeßfühler nach einem der Ansprüche 1 bis 2, dadurch gekennzeichnet, daß der Außendurchmesser des Heizkörpers (37, 37') kleiner ist als der Außendurchmesser des Elektroisolierteils (38, 38') und daß sich auf der zwischen Elektroisolierteil (38, 38') und Heizkörper (37, 37') gebildeten Schulter (42, 80) mindestens ein elektrischer Kontaktbereich (43) befindet, der einerseits mit einem vom Elektroisolierteil (38, 38') geführten, bis zum meßgasfernen Anschlußbereich des Sauerstoffmeßfühlers (10, 10') reichenden, elektrischen Verbindungsmittel (48, 51, 51') verbunden ist und meßgasseits mit dem Heizelement (40) oder mit einem zum Sensorelement (24, 24') gehörenden Kontaktbereich (32, 32') auf dem Festelektrolytrohr (26, 26') in elektrischer Verbindung steht.

4. Sauerstoffmeßfühler nach Anspruch 3, dadurch gekennzeichnet, daß zum meßgasfernen Anschlußbereich des Meßfühlers (10) führende elektrische Verbindungsmittel (48, 51) aus Draht bestehen.

5. Sauerstoffmeßfühler nach Anspruch 3, dadurch gekennzeichnet, daß zum meßgasfernen Anschlußbereich des Meßfühlers (10') führende elektrische Verbindungsmittel (51') als Leiterbahnen ausgebildet sind und ausschließlich ihrer Anschlußbereiche von einer Elektroisolier schicht bedeckt sind.

6. Sauerstoffmeßfühler nach einem der Ansprüche 1 bis 5, dadurch gekennzeichnet, daß der Heizkörper (37, 37') eine Axialbohrung (46, 46') aufweist, die sich vom meßgasseitigen Ende des Heizkörpers (37, 37') in Richtung Elektroisolierteil (38, 38') erstreckt.

**Claims**

1. Oxygen sensing element (10, 10'), in particular for determining the oxygen content in exhaust gases of internal combustion engines and furnace installations, with a metal housing (11, 11') which possesses fixing means (12, 13, 14) for installation in a test-gas pipe and has a stepped tongitudinal drilled hole (21, 21') whose end section on the test-gas side encloses at least one longitudinal section of a tubular ceramic part (26, 26') firmly and so as to form a seal, which part consists at least partially of material which conducts oxygen ions, may be sealed on the test-gas side with a base (27), carries on its outside a porous layer-type electrode (28, 28') preferably covered with a porous protective layer, has on its inside a layer-type, preferably porous counter electrode (30, 30'), contains in its interior space (29, 29') an electrical heating unit (37, 37') with a rod-type ceramic carrier (39, 39') for the heating element (40) and carries on its end section, remote from the test gas, intended for at least one of the two electrodes (28, 28'; 30, 30') a layer-type contact region (32, 32') which is in contact with an electrical connecting means (51, 51'), which is fed by means of an electrically insulating part (38, 38') to the connecting region, remote from the test gas, of the oxygen sensing element (10, 10'), characterized in that the electrically insulating part (38, 38') is rigidly connected to the electrical heating unit (37, 37') at its end section at the test gas side, in addition channels at least one electrical connecting means (48) for the heating unit (37, 37') and, furthermore, has a locating element (54, 54') by means of which electrical contact regions (43) present on the electrically insulating part (38, 38') are held in a particular position with the correlate contact regions (32, 32') on the solid electrolyte tube (26, 26').

2. Oxygen sensing element according to Claim 1, characterized in that the carrier (39) of the heating element (40) is also moulded onto the electrically insulating part (38).

3. Oxygen sensing element according to one of the Claims 1 to 2, characterized in that the outside diameter of the heating unit (37, 37') is smaller than the outside diameter of the electrically insulating part (38, 38') and in that, on the shoulder (42, 80) formed between electrically insulating part (38, 38') and heating unit (37, 37'), there is located at least one electrical contact region (43) which is connected, on the one hand, to an electrical connecting means (48, 51, 51') channelled by the electrically insulating part (38, 38') and extending right up to the connecting region, remote from the test gas, of the oxygen sensing element (10, 10'), and on the test-gas side is in electrical contact with the heating element (40) or with a contact region (32, 32'), belonging to the sensor element (24, 24'), on the solid electrolyte tube (26, 26').

4. Oxygen sensing element according to Claim 3, characterized in that electrical connecting means (48, 51) leading to the connecting region, remote from the test gas, of the sensing element (10) consist of wire.

5. Oxygen sensing element according to Claim 3, characterized in that electrical connecting means (51') leading to the connecting region, remote from the test gas, of the sensing element (10') are formed as conductor tracks and are covered, except for their connecting regions, by an electrically insulating layer.

6. Oxygen sensing element according to one of the Claims 1 to 5, characterized in that the heating unit (37, 37') has an axial drilled hole (46, 46') which extends from the end, at the test-gas side, of the heating unit (37, 37') in the direction of the electrically insulating part (38, 38').

**Revendications**

1. Détecteur d'oxygène (10, 10'), notamment pour déterminer la teneur en oxygène dans des gaz d'échappement de moteurs à combustion interne et d'installations de fours, comportant un boîtier métallique (11, 11') pourvu de moyens de fixation (12, 13, 14) pour l'insertion du détecteur dans une conduite de gaz soumis aux mesures, et d'un alésage longitudinal (21, 21') en gradins, qui entoure de façon fixe et étanche, par son tronçon terminal situé du côté du gaz soumis aux mesures, au moins un tronçon longitudinal d'un élément céramique tubulaire (26, 26') qui est constitué au moins partiellement en matériau conducteur d'ions d'oxygène, peut être fermé, du côté du gaz soumis aux mesures, par un fond (27), porte sur sa face extérieure une électrode (28, 28') poreuse, en forme de couche recouverte de préférence d'une couche de protection poreuse, comporte sur sa face intérieure une contre-électrode (30, 30'), de préférence poreuse, en forme de couche, contient dans son espace intérieur (29, 29') un corps chauffant électrique (37, 37'), avec un support céramique (39, 39'), en forme de barre, pour l'élément chauffant (40), et porte sur son tronçon terminal éloigné du gaz soumis aux mesures pour l'une au moins des deux électrodes (28, 28', 30, 30'), une zone de contact (32, 32') en forme de couche, qui est en contact avec un moyen de liaison électrique (51, 51'), guidé au moyen d'un élément diélectrique (38, 38') jusqu'à la zone de raccordement du détecteur d'oxygène (10, 10') éloignée du gaz soumie aux mesures, détecteur d'oxygène caractérisé en ce que l'élément diélectrique (38, 38') est relié rigidement, sur son tronçon terminal situé du côté du gaz soumis aux mesures, au corps chauffant électrique (37, 37'), en outre guide au moins un moyen de liaison électrique (48) pour le corps chauffant (37, 37') et, d'autre part, est pourvu d'un élément de fixation (54, 54'), au moyen duquel est assure le maintien en position déterminée de zones de contact électrique existantes (43) sur l'élément diélectrique (38, 38') avec des zones de contact associées (32, 32') sur le tube (26, 26') d'électrolyte solide.

2. Détecteur d'oxygène selon la revendication 1, caractérisé en ce que le support (39) de l'élément chauffant (40) est formé avec celui-ci sur l'élément diélectrique (38).

3. Détecteur d'oxygène selon l'une des revendications 1 et 2, caractérisé en ce que le diamètre extérieur du corps chauffant (37, 37') est inférieur au diamètre extérieur de l'élément diélectrique (38, 38'), et en ce que, sur l'épaulement (42, 80) formé entre l'élément d'électrique (38, 38') et le corps chauffant (37, 37') est prévue au moins une zone de contact électrique (43), qui d'une part est reliée à un moyen de liaison électrique (48, 51, 51') guidé par l'élément diélectrique (38, 38') et s'étendant jusqu'à la zone de raccordement du détecteur d'oxygène (10, 10') éloignée du gaz soumis aux mesures, et est en liaison électrique, du côté du gaz soumis aux mesures, avec l'élément chauffant (40), ou avec une zone de contact (32, 32'), faisant partie de l'élément de détection (24, 24') sur le tube (26, 26') d'électrolyte solide.

4. Détecteur d'oxygène selon la revendication 3, caractérisé en ce que des moyens de liaison électriques (48, 51) menant à la zone de raccordement du détecteur (10) éloignée du gaz soumis aux mesures sont constitués d'un fil métallique.

5. Détecteur d'oxygène selon la revendication 3, caractérisé en ce que des moyens de liaison électriques, (51') menant à la zone de raccordement du détecteur (10') éloignée du gaz soumis aux mesures, sont constitués sous la forme de bandes conductrices, et exclusivement leurs zones de raccordmeent sont recouvertes d'une couche diélectrique.

6. Détecteur d'oxygène selon l'une des revendications 1 à 5, caractérisé en ce que le corps chauffant (37, 37') comporte un alésage axial (46, 46'), qui s'étend, depuis l'extrémité du corps chauffant (37, 37') située du côté du gaz soumis aux mesures, en direction de l'élément diélectrique (38, 38').

0 164 530

FIG.1   FIG.2

FIG.3